# EUROPEAN PATENT APPLICATION

(11) **EP 4 851 108 A1**
(43) Date of publication of application: **09.12.2026**
(21) Application number: 25749060.7
(22) Date of filing: 31.01.2025
(51) Int. Cl.: C01B 17/28

(54) **METHOD FOR PRODUCING LITHIUM SULFIDE**

(30) Priority: 31.01.2024 JP 2024013709
(71) Applicant: Mitsui Kinzoku Company, Limited, Tokyo 141-8584 (JP)
(72) Inventor: HAMADA, Shoma, Saitama 362-021 (JP); MATSUSHITA, Takayuki, Saitama 362-021 (JP)
(74) Representative: Novagraaf Technologies
(86) International application number: PCT/JP2025/003243
(87) International publication number: WO 2025/164774

(57) **Abstract**

An objective is to provide a method for producing lithium sulfide that improves the efficiency in the reaction between a lithium hydroxide material and a sulfur-containing gas as compared with conventional methods. A method for producing lithium sulfide of the invention includes bringing a sulfur-containing gas into contact with a lithium hydroxide material while pulverizing the lithium hydroxide material, thereby causing a reaction therebetween to produce lithium sulfide. Preferably, the lithium hydroxide material is a lithium hydroxide hydrate. Preferably, the lithium hydroxide material is pulverized by a high-shear pulverizer. Preferably, the high-shear pulverizer is a rotary blade pulverizer.

## Description

### Technical Field

The present invention relates to a method for producing lithium sulfide.

### Background Art

In recent years, secondary batteries have been attracting attention as part of efforts to prevent global warming through reductions in carbon dioxide emissions. Among them, solid-state batteries, which have both safety and high energy density, are expected to be put into practical use. One known type of solid electrolyte used in solid-state batteries is a sulfide solid electrolyte. Sulfide solid electrolytes are produced using, for example, lithium sulfide as a starting material. Lithium sulfide is generally produced by reacting hydrogen sulfide with a compound serving as a lithium source. For example, Patent Literatures 1 and 2 each disclose a method for producing lithium sulfide by reacting lithium hydroxide as a lithium source with hydrogen sulfide under heating.

Patent Literature 1 discloses a method for producing lithium sulfide, the method including the provision step of placing lithium hydroxide powder in a reaction vessel equipped with a gas inlet and a gas outlet, and the reaction step of introducing hydrogen sulfide gas into the reaction vessel through the gas inlet to react with the lithium hydroxide and venting unreacted hydrogen sulfide gas through the gas outlet, wherein the hydrogen sulfide gas concentration at the gas inlet, Cin is maintained within a range of 5% to 50% during the reaction step. Patent Literature 1 also states that this technique can suppress cracking due to shrinkage of lithium sulfide powder during lithium sulfide synthesis by a dry method, thereby improving the efficiency in production of lithium sulfide.

Patent Literature 2 discloses a method including reacting lithium hydroxide with hydrogen sulfide gas, wherein lithium hydroxide is introduced into a reaction vessel, the temperature of the inner wall of the reaction vessel that is in contact with the lithium hydroxide is maintained at 140 to 230°C, the temperature of the lid of the reaction vessel is maintained at 100°C or higher, and the reaction is carried out while stirring to prevent the lithium hydroxide from building up. Patent Literature 2 purports that this technique makes it possible to prevent the lithium hydroxide from agglomerating and the product from adhering to the reaction vessel without using a solvent.

### Citation List

### Patent Literature

Patent Literature 1: JP 2023-14712 A
Patent Literature 2: WO 2016/098351

### Summary of Invention

In a method for synthesizing lithium sulfide by reacting a lithium hydroxide material with a sulfur-containing gas, water generated during heating and during the progress of the reaction causes the lithium hydroxide material particles to adhere to each other to form agglomerates. As a result, lithium sulfide is formed only on the surface of the agglomerates, hindering the progress of the reaction. The formation of agglomerates is pronounced particularly when a lithium hydroxide hydrate is used as the lithium hydroxide material.

However, the methods disclosed in Patent Literatures 1 and 2 are not sufficient for effectively solving this problem concerning the lithium hydroxide material. In particular, Patent Literatures 1 and 2 do not fully consider techniques for improving production efficiency by allowing the reaction to proceed even when a lithium hydroxide hydrate is used.

Therefore, an objective of the present invention is to provide a method for producing lithium sulfide that can eliminate the various drawbacks of the conventional techniques described above.

The present invention provides a method for producing lithium sulfide, the method including bringing a sulfur-containing gas into contact with a lithium hydroxide material while pulverizing the lithium hydroxide material, thereby causing a reaction therebetween to produce lithium sulfide.

### Description of Embodiments

The present invention will be described below based on its preferred embodiments. The lithium sulfide production method of the present invention includes bringing a sulfur-containing gas into contact with a lithium hydroxide material while pulverizing the lithium hydroxide material, thereby causing a reaction therebetween to produce lithium sulfide.

In the present invention, examples of the sulfur-containing gas that may be used include hydrogen sulfide (H₂S) gas and sulfur (S) gas. These gases may be used singly, or in combination of two or more thereof. These gases may be used as they are or may be diluted with an inert gas. Among these, a gas containing hydrogen sulfide is preferably used as the sulfur-containing gas since it is a gas at ambient temperature and ambient pressure and is therefore easy to handle.

The pressure of the sulfur-containing gas in the reaction system may be atmospheric, subatmospheric, or superatmospheric. Generally, sulfurization of the lithium hydroxide material can be successfully achieved by allowing the sulfur-containing gas to flow through the reaction system at atmospheric pressure.

For example, the amount of sulfur-containing gas used in the production method is preferably 0.5 mol or more, more preferably 1.0 mol or more, and even more preferably 1.5 mol or more, in terms of sulfur atoms in the sulfur-containing gas, per mole of lithium atoms. For example, the amount of sulfur-containing gas used is preferably 10.0 mol or less, more preferably 7.0 mol or less, and even more preferably 4.0 mol or less, in terms of sulfur atoms in the sulfur-containing gas, per mole of lithium atoms. When the amount of sulfur-containing gas used per mole of lithium atoms is within the above range, high-purity lithium sulfide can be obtained. Furthermore, production costs can be reduced, production volume can be increased, and also the burden of equipment maintenance can be reduced.

For example, the concentration of the sulfur-containing gas in the reaction vessel in the present invention is preferably 50 vol% or more, and more preferably 70 vol% or more, for promoting the reaction with the lithium hydroxide material under pulverization. The concentration of the sulfur-containing gas in the reaction vessel is preferably 100 vol% or less, and more preferably 90 vol% or less, for increasing the efficiency in the pulverization of the lithium hydroxide material. Examples of the gas component other than the sulfur-containing gas in the reaction vessel include inert gases, such as nitrogen and argon.

Examples of the lithium hydroxide material usable in the production method of the present invention include anhydrous lithium hydroxide and lithium hydroxide hydrates. The lithium hydroxide material is a solid. The expression "solid lithium hydroxide material" is intended to exclude lithium hydroxide in the form of an aqueous solution. Therefore, lithium hydroxide material that has absorbed water from the air is encompassed within the scope of "solid lithium hydroxide material". The reaction between lithium hydroxide and hydrogen sulfide is represented by the following reaction formula (1). In this case, lithium hydroxide (LiOH) and hydrogen sulfide (H₂S) react to produce lithium sulfide (Li₂S) and also water (H₂O) as a by-product. In this reaction, solid lithium sulfide is obtained from solid lithium hydroxide.

2LiOH + H₂S → Li₂S + 2H₂O ... (1)

When the lithium hydroxide material is reacted with the sulfur-containing gas, the lithium hydroxide material, which is hygroscopic, absorbs moisture so that the lithium hydroxide material particles adhere to each other to form agglomerates, as described above. When lithium sulfide is produced, the lithium sulfide as a reaction product, which is also deliquescent, is present within the agglomerates. When such agglomerates are formed, the lithium hydroxide material particles adhere to each other, or the lithium hydroxide material particles and the lithium sulfide particles adhere to each other. This makes it difficult for the sulfur-containing gas to penetrate into the interior of the particles, thereby tending to inhibit the reaction from proceeding.

The present inventors have found that when the lithium hydroxide material is a lithium hydroxide hydrate, the formation of agglomerates during the reaction of the above formula (1) is significant.

When the lithium hydroxide material is lithium hydroxide monohydrate, the reaction formula is as follows:

2LiOH·H₂O + H₂S → Li₂S + 4H₂O ... (2)

Thus, in cases where a hydrate is used as the lithium hydroxide material, the amount of water produced is at least twice as much as in the case of using an anhydride, and therefore, the tendency for the formation of agglomerates is more significant.

In conventional methods, when a hydrate is used as the lithium hydroxide material, it is common to dry the material to remove the water of crystallization, before reacting it with a sulfur-containing gas. In contrast, the present invention can effectively promote the progress of the reaction even when a lithium hydroxide hydrate is used. As a result, the present invention can omit the step of drying lithium hydroxide hydrate before reacting it with a sulfur-containing gas, thereby reducing the cost of producing lithium sulfide as compared to conventional methods. For this reason, the present invention preferably uses a lithium hydroxide hydrate as the lithium hydroxide material. From the above perspective, the water content of the lithium hydroxide material is preferably 0.001 mass% or more, and more preferably 0.01 mass% or more. The water content of the lithium hydroxide material may be 45 mass% or less, or 43 mass% or less, for reaction progress. The "water content" as used herein includes the amount of water of crystallization.

The high costs of drying the lithium hydroxide material and removing moisture therefrom and also the difficulty in allowing the reaction between the lithium hydroxide material and a sulfur-containing gas to proceed are particularly significant issues when producing lithium sulfide on a large industrial scale by reacting a sulfur-containing gas with a lithium hydroxide material. From this perspective, the internal volume of the reaction vessel in the present invention, for example, is preferably 3 L or more, more preferably 20 L or more, and particularly preferably 150 L or more. The internal volume of the reaction vessel can be, for example, 4000 L or less.

In terms of pulverization efficiency, the amount of lithium hydroxide material loaded into the reaction vessel may be preferably 500 g or more, and more preferably 540 g or more, per 1 L of vessel volume. Also, in terms of pulverization efficiency, the amount is preferably 630 g or less, and more preferably 600 g or less.

In the present invention, there is no particular limitation on the particle diameter of the lithium hydroxide material used in the reaction, but it is preferable that the particle diameter at the start of the reaction be a certain value or more in view of pulverization efficiency. From this perspective, for example, the volume-based cumulative particle diameter of the lithium hydroxide material at a cumulative volume of 50 vol%, D₅₀ is preferably 1 µm or greater, more preferably 10 µm or greater, and even more preferably 100 µm or greater, as measured by a laser diffraction/scattering particle size distribution analysis method. For example, the volume-based cumulative particle diameter D₅₀ of the lithium hydroxide material is preferably 1,000 µm or less, more preferably 800 µm or less, and even more preferably 600 µm or less, in view of reactivity with a sulfur-containing gas.

When reacting the sulfur-containing gas with the lithium hydroxide material, it is preferable to heat the inside of the vessel to an appropriate temperature. Specifically, the temperature inside the vessel when reacting the sulfur-containing gas with the lithium hydroxide material is preferably 100°C or higher, more preferably 120°C or higher, and even more preferably 150°C or higher, for allowing the reaction to proceed sufficiently. The temperature when reacting the sulfur-containing gas with the lithium hydroxide material is preferably 450°C or lower, more preferably 400°C or lower, and even more preferably 350°C or lower, for preventing the lithium hydroxide from melting. The heating method is not particularly limited, and examples include allowing a heat transfer medium to pass along the wall surface of the reaction vessel.

For example, the temperature inside the vessel during pulverization, which will be described later, may be the same as or different from the temperature inside the vessel when pulverization is not being performed. If they are different, the temperature inside the vessel when pulverization is being performed may be higher or lower than the temperature inside the vessel when pulverization is not being performed.

The reaction time between the sulfur-containing gas and the lithium hydroxide material is preferably 10 minutes or longer, for obtaining lithium sulfide having a higher purity, and the reaction time is more preferably 30 minutes or longer. The reaction time between the sulfur-containing gas and the lithium hydroxide material is preferably shorter to shorten the production time; for example, 720 minutes or less is preferable, and 600 minutes or less is more preferable.

In this invention, in order to achieve the object of improving the efficiency in the reaction between lithium hydroxide material and sulfur-containing gas as compared to conventional methods, a sulfur-containing gas is brought into contact with the lithium hydroxide material while the lithium hydroxide material is pulverized, thereby causing a reaction therebetween. The lithium hydroxide material (particularly lithium hydroxide hydrate) may solidify while entraining lithium sulfide, thereby forming agglomerates; however, by pulverizing the agglomerates containing the lithium hydroxide material and lithium sulfide, new surfaces are created where the lithium hydroxide is exposed to the outside, and the reaction progresses quickly as these surfaces react with the sulfur-containing gas. In particular, pulverization can effectively improve the situation where lithium sulfide is produced on the surface of these agglomerates to inhibit reaction.

As used herein, "pulverization" and its derivatives refer to the application of any of high shearing force, impact force, compression force, and friction force to pulverize consolidated agglomerates containing the lithium hydroxide material and lithium sulfide, which are formed as the reaction between the lithium hydroxide material and the sulfur-containing gas progresses. This operation breaks up the agglomerates containing the lithium hydroxide material and lithium sulfide to expose new surfaces of the lithium hydroxide material to the sulfur-containing gas, effectively promoting the lithium hydroxide reaction. Thus, "pulverization" as used herein is different from simply vibrating or stirring the lithium hydroxide material during the reaction to prevent lithium hydroxide particles from adhering to each other or lithium hydroxide powder from adhering to the reaction vessel. It is also different from using media in combination with vibration to help the lithium hydroxide material powder acquire flowability. Operations such as simple vibration, stirring, or imparting flowability generally cannot sufficiently promote the progress of the reaction in cases where a hydrate is used as the lithium hydroxide material.

For the above reasons, a preferred method for pulverizing the lithium hydroxide material may be dry pulverization using a high-shear pulverizer. Examples of high-shear pulverizers include rotary blade pulverizers. Pulverization using a rotary blade pulverizer is preferred for the following reasons: it can efficiently pulverize agglomerates of the lithium hydroxide material, resulting in high production efficiency when the production method of the present invention is carried out on a large scale; and it not only pulverizes the lithium hydroxide material but can also increase its flowability, thereby improving reactivity with sulfur-containing gas to enhance the effects of the present invention. It is possible to use a rotary blade pulverizer in which a rotating shaft equipped with blades is rotated about an axis of rotation. Concrete examples that may be used include single-shaft rotary shear pulverizers, double-shaft rotary shear pulverizers, multi-shaft screw pulverizers, and rotary blade high-shear mixers (FM Mixer (manufactured by Nippon Coke and Engineering Co., Ltd.), High-Speed Mixer (manufactured by Earth Technica Co., Ltd.), and Super Mixer (manufactured by Kawata Manufacturing Co., Ltd.)).

During pulverization using a rotary blade pulverizer, the circumferential speed of the agitator blades is preferably 450 m/min or more, and more preferably 700 m/min or more. The rotation speed of the agitator blades is preferably 5400 m/min or less, and more preferably 4500 m/min or less.

It is preferable that the pulverization be carried out for, for example, 30 seconds or more, and more preferably 60 seconds or more. In the case of a batch method, it is preferable that the pulverization be carried out for, for example, 720 minutes or less for shortening the production time and preventing granulation and reagglomeration, and 600 minutes or less is more preferable. Here, in cases where pulverization is carried out intermittently, the pulverization time is the total of the pulverization times of the respective pulverization operations.

In the present invention, the pulverization is preferably such an operation that the D₅₀ of the lithium hydroxide material one minute after the start of pulverization is 90% or less, more preferably 80% or less, and particularly preferably 50% or less, of the D₅₀ at the start of the pulverization operation, wherein the D₅₀ is the volume-based cumulative particle diameter at a cumulative volume of 50 vol% as measured by a laser diffraction/scattering particle size distribution analysis method. The pulverization is preferably such an operation that the D₅₀ of the lithium hydroxide material one minute after the start of pulverization is 10% or more of the D₅₀ at the start of the pulverization operation.

When introducing the lithium hydroxide material and sulfur-containing gas into the reaction system, the pulverization operation of the lithium hydroxide material may be initiated, for example, before the lithium hydroxide material and sulfur-containing gas come into contact with each other, or simultaneously with the contact between the lithium hydroxide material and sulfur-containing gas, or after the lithium hydroxide material and sulfur-containing gas have begun to contact each other. In particular, initiating the pulverization simultaneously with the contact between the lithium hydroxide material and sulfur-containing gas, or after the contact of the lithium hydroxide material and sulfur-containing gas has begun, is preferred for the following reasons: such timing prevents the lithium hydroxide material at the start of the reaction from having an excessively small particle size, which may, in turn, cause a rapid increase in the water content to make the lithium hydroxide material more likely to adhere to the walls of the reaction vessel; and particle granulation and reagglomeration can also be prevented. From this perspective, it is particularly preferable to begin pulverization after the lithium hydroxide material and sulfur-containing gas have begun to contact each other.

The pulverization operation may be started after lithium sulfide begins to be produced by the reaction between the lithium hydroxide material and the sulfur-containing gas, or may be started before lithium sulfide is produced.

The pulverization operation of the lithium hydroxide material may be carried out, for example, continuously or intermittently during the reaction. The pulverization operation may be carried out once or more.

A nozzle for introducing the sulfur-containing gas may be provided such that the sulfur-containing gas is sprayed from the vicinity of the position where the lithium hydroxide material is pulverized. For example, when the outlet of the nozzle for introducing the sulfur-containing gas is located at a height position within ±3 cm of the height position of the agitator blade in the pulverizer, favorable contact can be achieved between newly formed cross-sectional surfaces of the lithium hydroxide material and the sulfur-containing gas, resulting in high reaction efficiency. The height position of the agitator blade refers to the position ranging from the highest to the lowest position of the agitator blade in the height direction of the pulverizer.

When pulverizing the lithium hydroxide material, the reaction efficiency between the sulfur-containing gas and the lithium hydroxide material may be further increased by, for example, vibrating the reaction vessel.

The moisture content in the reaction vessel can be reduced using known techniques, such as reducing the pressure inside the vessel or heating the vessel walls.

The lithium sulfide obtained by this production method is useful, for example, as a material for sulfide solid electrolytes in lithium-ion batteries. For example, the lithium sulfide can be subjected to a mechanical milling reaction with phosphorus pentasulfide (P₂S₅) or another sulfide to synthesize a solid electrolyte such as Li₇P₃S₁₁ or LiPS₄. Alternatively, a crystalline solid electrolyte, such as a solid electrolyte having a crystal phase with an argyrodite-type crystal structure, can be synthesized by firing a mixture of the lithium sulfide, phosphorus pentasulfide, and a lithium halide, such as lithium chloride (LiCl) and/or lithium bromide (LiBr), in an inert gas atmosphere or a hydrogen sulfide atmosphere.

The substance to be reacted with the lithium sulfide to synthesize the solid electrolyte is not particularly limited, and examples thereof include phosphorus pentasulfide mentioned above and also silicon sulfide (SiS₂) and germanium sulfide (GeS₂).

In relation to the foregoing embodiments, the present invention further discloses the following methods for producing lithium sulfide.
(1) A method for producing lithium sulfide, comprising bringing a sulfur-containing gas into contact with a lithium hydroxide material while pulverizing the lithium hydroxide material, thereby causing a reaction therebetween to produce lithium sulfide.
(2) The method for producing lithium sulfide as set forth in clause (1), wherein the lithium hydroxide material is a lithium hydroxide hydrate.
(3) The method for producing lithium sulfide as set forth in clause (1) or (2), wherein the lithium hydroxide material is pulverized by a high-shear pulverizer.
(4) The method for producing lithium sulfide as set forth in clause (3), wherein the high-shear pulverizer is a rotary blade pulverizer.

### Industrial Applicability

As described in detail above, the present invention provides a method for producing lithium sulfide that improves the reaction efficiency between a lithium hydroxide material and a sulfur-containing gas as compared with conventional methods.

## Claims

1. A method for producing lithium sulfide, comprising bringing a sulfur-containing gas into contact with a lithium hydroxide material while pulverizing the lithium hydroxide material, thereby causing a reaction therebetween to produce lithium sulfide.

2. The method for producing lithium sulfide according to claim 1, wherein the lithium hydroxide material is a lithium hydroxide hydrate.

3. The method for producing lithium sulfide according to claim 1 or 2, wherein the lithium hydroxide material is pulverized by a high-shear pulverizer.

4. The method for producing lithium sulfide according to claim 3, wherein the high-shear pulverizer is a rotary blade pulverizer.
